# EUROPEAN PATENT SPECIFICATION

(11) **EP 0 726 989 B1**
(45) Date of publication and mention of the grant of the patent: **04.08.1999**
(21) Application number: 93924850.6
(22) Date of filing: 20.10.1993
(51) Int. Cl.: E04B 1/48, F16B 13/13

(54) **PLUG**
STECKER
CHEVILLE

(30) Priority: 03.11.1992 SE 9203252
(43) Date of publication of application: 21.08.1996
(73) Proprietor: THORSMAN & CO AB, S-611 29 Nyköping (SE)
(72) Inventor: BAUMBACH, Thorkild, S-761 40 Norrtälje (SE); LEGERIUS, Bengt, S-611 65 Nyköping (SE); SUNDSTRÖM, Inge, S-611 45 Nyköping (SE)
(74) Representative: Johansson, Lars-Erik
(86) International application number: SE9300856
(87) International publication number: WO9410400

(56) References cited:
- WO-A-90/08265
- SE-B- 459 273
- US-A- 4 050 345
- US-A- 4 629 380

## Description

### TECHNICAL FIELD

The present invention refers to a plug, having a central, longitudinal hole for cooperation with a screw or equivalent which plug is intended to be mounted in a hole in a building component preferably of a brittle and easily workable material like plaster or light concrete. The plug comprises on one hand, in its fixed condition, an inner end portion arranged to receive and engage the thread of the cooperating screw, and on the other hand at least two legs extending from the inner end portion and an outer end portion in which the legs join and which comprises a stop flange or equivalent for bearing on the edge of the hole, the legs being arranged subsequent to the positioning of the plug in a hole in a building component at the tightening of the cooperating screw to expand until they bear against the building component.

### BACKGROUND ART

Several different embodiments of plugs for use in hollow walls as well as walls of solid material are previously known. Such a "universal plug" is shown in the Swedish patent 462602. This plug corresponds mainly to the plug described under the heading TECHNICAL FIELD but is, in order to give the largest possible withdrawal resistance, provided with four legs connecting the two end portions. The great advantage with the use of a universal plug resides in the feature of the plug to be usable, as mentioned, in dead end holes in homogeneous building components as well as in through holes in board material. The assortment of plugs of the installers is thus restricted and the work of the installers is made easier as they do not have to consider the type of plug to be used in a specific hole.

Irrespective of in which type of hole the plug is to be mounted the hole has to be pre-drilled. The installer has thus to be provided with a drilling machine. As all professional screwdriving is carried out by means of electrical screwdrivers these days, the installer has to be provided with such a machine as well and has consequently to take care of two electrical machines.

As an alternative the drilling of a hole for a plug as well as the mounting of the screw cooperating with the plug may be carried out by means of the same machine but in that case the installer has to change tool, i.e alternate between drill and chisel or bit in the machine usually several times during a working cycle. By experience separate drills and chisels have a certain tendency to be mislaid or get lost, incurring extra waste of time for searching or providing new ones.

### SUMMARY OF THE INVENTION

The object of the present invention is to facilitate the work of the installers by reducing the number of operations as well as the number of different devises and machines to be handled by the installers. This object is attained by the use of a plug which is provided with a drilling element and which when it is caused to rotate around its longitudinal axis itself can drill the hole in which it is to be mounted. The plug is caused to rotate by means of the same chisel which is going to be used to drive the screw cooperating with the plug. The characteristics of the plug appear from the appended claims.

### BRIEF DESCRIPTION OF THE DRAWINGS

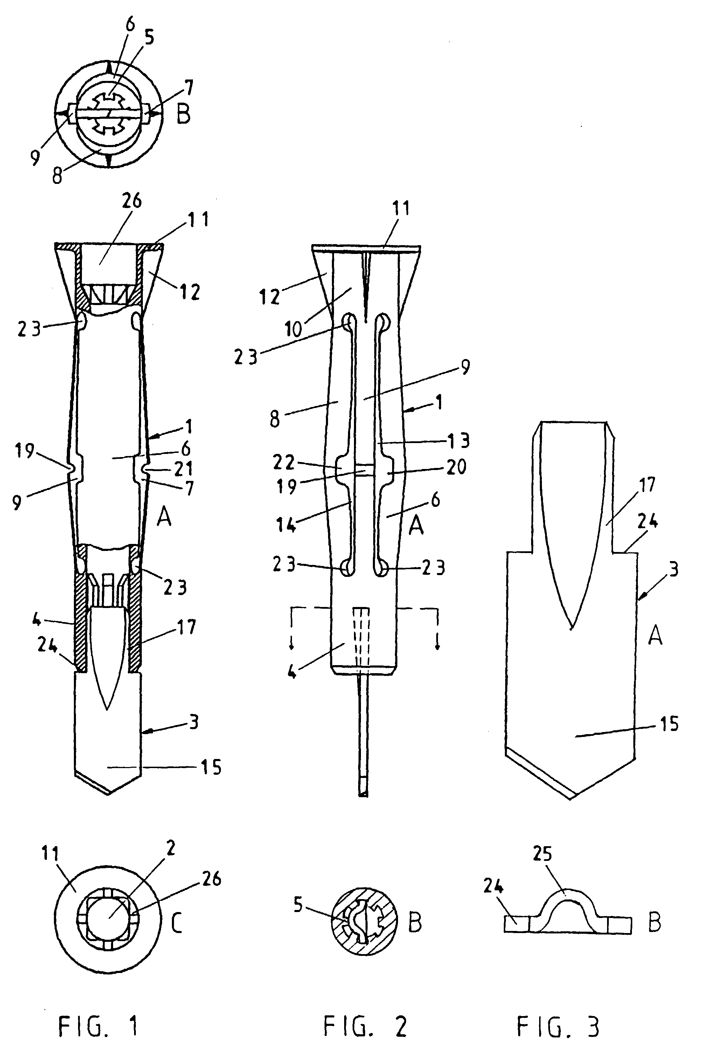

The invention will be described more in detail in the following with reference to the accompanying drawing in which figure 1 shows, partly sectioned, a plug provided with a drill in a view with corresponding end-views. Figure 2 shows the plug according to figure 1 in a side-view and sectioned. Figure 3 shows in magnification the design of the drilling means in a plane view and in an end view.

### DETAILED DESCRIPTION OF THE INVENTION

In the figures 1 and 2 the plug according to the invention is shown in a plane- and a side-view respectively and in figure 1 partly sectioned. The plug according to the invention comprises a plug body 1 and a drilling element 3 associated to the same. The plug body 1 as such preferably made of plastic, has a conventionally design with an axial through hole 2 adapted for cooperation with a screw which is not shown. The plug also comprises, in its fixed condition, an inner end portion 4, in which the through hole 2 is provided with an inner thread or, as shown in figures 1 and 2, internal ridges 5 in which the screw at the introduction in the plug cuts threads. From the inner end portion 4, four legs 6-9 extend which join in an outer end portion 10 which is provided with a flange 11 and means 12 to stop rotation of the plug. The four legs are created by means of two slots 13,14 arranged in essentially parallel planes having an increasing width in the direction of the central part of the plug. The central portions of the legs 6-9 are somewhat divergent and the plug has its largest part in the transverse direction at this central part. Due to the fact that the inner surfaces of the legs 6-9 are limited by the circular hole 2 and thus are straight in axial direction, the legs have also their largest thickness at the mid portion. From figure 1B which shows the plug in an end view appears that the design of the external profile of the legs is such that if the legs are pressed to bear on each other for example by the introduction of the plug in a dead end hole, having nominal diameter, in a building component, then the mid portion will have essentially the same diameter as the end portions. Hereby a contraction will be created in the mid portion of the hole 2, through which the cooperating screw at the fastening of an object will be screwed creating a wedge effect and the plug will expand and be caused to bear on four sectors of the wall of the hole with considerable force.

At the fastening of an object on a board formed building component said end portion is pulled in the direction of the back side of the board at the introduction of the cooperating screw in the hole of the inner end portion provided with ridges 5. Hereby the legs 6-9 are bent or broken radially outwards which is facilitated on one hand by the fact that the legs are somewhat divergent and on the other hand by the fact that the legs are provided with sectional weakenings in the form of notches 19-22 arranged at the mid portions of the legs. Of these notches, the notches 20, 22 on the legs 6, 8 outside the parallel planes of the slots, are turned in the direction of the center hole 2 while the notches 19, 21 on the legs between the planes of the slots 7, 9 are turned in the direction from the center hole. The bending of the legs 6, 8 is further facilitated by the arrangement of sectional weakenings 23 at the ends of the slots.

Between the internal ridges on the wall of the hole 2 at the inner end portion 4 of the plug, grooves 26 are created which constitute fastening arrangements for the drilling element 3 adapted to the plug, which drilling element is arranged between two opposite grooves. The drilling element 3 is constituted by a flat piece of metal comprising on one hand a drilling portion 15 with parallel sides separated a distance corresponding to the external diameter of the inner end portion 4, the free end of which is designed having two oblique cutting edges, on the other hand a fastening portion 17 the width of which corresponds to the diameter of the hole 2 of the plug, in the transition between the drilling- and fastening portions bearing surfaces 24 are created which when the drilling element 3 is mounted bear against the inner end surface of the plug. The fastening portion 17 has a bulge 25 which at the free end of the fastening portion bears against the ridges 5 in the hole 2 and which in the direction of the mid portion of the drilling element decreases in width and depth.

At the mounting of the plug 1 the end portion of a motor actuated chisel or bit is introduced in the recess 26, the tip of the drilling element 3 is applied against the surface and the chisel is caused to rotate and thereby the plug 1 and its drilling element. If the drilling is carried out in a plaster wallboard it is stopped when the drilling element has broken through the inner surface of the plaster wallboard, after which the flange 11 of the plug is pushed or hammered until bearing against the external surface of the plaster wallboard. Thereafter, when an object is mounted the cooperating screw will push out the drilling element 3 from the inner end portion 4 of the plug into the space behind the plaster wallboard.

When the plug is mounted in light concrete the drilling is interrupted when the devices 12 on the inside of the flange 11 tend to contact the light concrete and the flange 11 is brought by means of a hammer or equivalent in contact with the surface of the light concrete, whereby the drilling element 3 at the same time is hammered into the bottom of the newly drilled hole. When the cooperating screw is tightened it will follow the bulging 25 of the drilling element 3 and in the final phase penetrate beside the drilling element 3 thereby creating an expansion of the inner end portion 4 causing a reenforced anchoring of the plug 1.

## Claims

1. Plug (1), having a central, longitudinal hole (2) for cooperation with a screw or equivalent which plug is intended to be arranged in a hole in a building component preferably of a brittle and/or easily workable material like plaster, which plug (1) comprises, in its fixed condition, an inner end portion (4) arranged to receive and engage the thread of the cooperating screw, at least two legs (6-9) extending from the inner end portion (4), an outer end portion (10) in which the legs (6-9) join and which comprises a flange (11) or equivalent for bearing on the edge of the hole, the legs (6-9) being arranged subsequent to the positioning of the plug (1) in a hole in a building component at the tightening of the cooperating screw to expand until they bear against the building component, **charaterised in that** the inner end portion (4) of the plug (1) is provided with a drilling element (3) which when the plug (1) is caused to rotate around its longitudinal axis is arranged to drill the hole required for the mounting in the building component and which when the cooperating screw is driven into the plug allows passage of the same or will be removed by the same.

2. Plug according to claim 1, **charaterised in that** the outer end portion (10) provided with a flange has a central recess (26) adapted to a chisel or bit arranged on a drilling machine.

3. Plug according to claim 2, **charaterised in that** the central recess (26) is designed to fit to the same chisel intended for driving the cooperating screw.

## Patentansprüche

1. Stecker (1), der eine mittlere Längsöffnung (2) zum Zusammenwirken mit einer Schraube oder ähnlichem aufweist, wobei der Stecker zur Anordnung in einer Öffnung in einem Gebäudeteil, vorzugsweise aus einem spröden und / oder leicht zu verarbeitendem Material wie Gips, bestimmt ist, wobei der Stecker (1) in seinem befestigten Zustand folgendes umfaßt: einen inneren Endabschnitt (4), der zum Aufnehmen und Eingreifen des Gewindes der zusammenwirkenden Schraube angeordnet ist, zumindest zwei Beine (6 - 9), die sich von dem inneren Endabschnitt (4) erstrecken, einen äußeren Endabschnitt (10), in den die Beine (6 - 9) münden und der einen Flansch (11) oder ähnliches zum Anliegen an der Kante der Öffnung umfaßt, wobei die Beine (6 - 9) darauffolgend auf die Positionierung des Steckers (1) in einer Öffnung eines Gebäudeteils beim Anziehen der zusammenwirkenden Schraube angeordnet sind, um sich so weit auszudehnen, bis sie an dem Gebäudeteil anliegen, dadurch gekennzeichnet, daß der innere Endabschnitt (4) des Steckers (1) mit einem Bohrelement (3) ausgestattet ist, das, wenn der Stecker (1) zu einer Drehung um seine Längsachse gebracht wird, angeordnet ist, um die für das Befestigen in dem Gebäudeteil erforderliche Öffnung zu bohren, und das, wenn die zusammenwirkende Schraube in den Stecker geschraubt wird, den Durchgang dieser ermöglicht, oder durch diese entfernt wird.

2. Stecker nach Anspruch 1, dadurch gekennzeichnet, daß der äußere Endabschnitt (10), der mit einem Flansch ausgestattet ist, einen mittleren Rücksprung (26) aufweist, der an einen Meißel oder eine Bohrspitze angepaßt ist, die an einer Bohrmaschine angeordnet ist.

3. Stecker nach Anspruch 2, dadurch gekennzeichnet, daß der mittlere Rücksprung (26) so gestaltet ist, daß er mit dem gleichen Meißel zusammenpaßt, der zum Schrauben der zusammenwirkenden Schraube vorgesehen ist.

## Revendications

1. Cheville (1) munie d'un trou longitudinal central (2) pour coopérer avec une vis ou équivalent, cette cheville étant destinée à se monter dans un trou percé dans un élément de construction, de préférence en matériau fragile et/ou facile à travailler, tel que du plâtre, la cheville (1) comprenant, dans son état fixé, une partie d'extrémité intérieure (4) disposée pour recevoir et visser le pas de vis d'une vis associée en coopération, au moins deux pattes (6-9) partant de la partie d'extrémité intérieure (4), une partie d'extrémité extérieure (10) dans laquelle les pattes (6-9) se rejoignent, et qui comprend une collerette (11) ou équivalent destinée à s'appuyer sur le bord du trou, les pattes (6-9) étant disposées, après le positionnement de la cheville (1) dans un trou d'un élément de construction, et lorsqu'on serre la vis associée en coopération, ces pattes étant amenées à se dilater jusqu'à venir s'appuyer contre l'élément de construction,
caractérisée en ce que
la partie d'extrémité intérieure (4) de la cheville (1) est munie d'un élément de forage (3) qui, lorsqu'on fait tourner la cheville (1) autour de son axe longitudinal, est disposé de manière à forer le trou requis pour le montage dans l'élément de construction et qui, lorsqu'on visse la vis associée en coopération dans la cheville, permet le passage ou l'extraction de la vis par celui-ci.

2. Cheville selon la revendication 1,
caractérisée en ce que
la partie d'extrémité extérieure (10) munie d'une collerette, comporte une cavité centrale (26) destinée à recevoir un ciseau ou burin monté sur une perceuse.

3. Cheville selon la revendication 2,
caractérisée en ce que
la cavité centrale (26) est conçue pour s'adapter au même ciseau que celui qui est destiné à faire tourner la vis associée en coopération.
